# EUROPÄISCHE PATENTANMELDUNG

(11) **EP 2 523 332 A1**
(43) Veröffentlichungstag der Anmeldung: **14.11.2012**
(21) Anmeldenummer: 11165624.5
(22) Anmeldetag: 11.05.2011
(51) Int. Cl.: H02M 5/458, H02M 1/36

(54) **Frequenzumrichter mit Vorladewiderstand und Verfahren zum Betreiben desselben**

(71) Anmelder: SIEMENS AKTIENGESELLSCHAFT, 80333 München (DE)
(72) Erfinder: Schwinn, Thomas, 91074, Herzogenaurach (DE)

(57) **Zusammenfassung**

Die Erfindung betrifft einen Frequenzumrichter (26) zum Betreiben einer elektrischen Maschine (14) an einem elektrischen Versorgungsnetz (12). Bei dem Frequenzumrichter ist eine Einspeiseeinheit (28) über einen Gleichspannungs-Zwischenkreis (30) mit einem Umrichter (32) gekoppelt. In dem Zwischenkreis (30) ist zumindest ein Zwischenkreiskondensator (46) bereitgestellt. Es soll ein ausreichender Schutz der Einspeiseeinheit (28) vor einem Überstrom bereitgestellt werden. Der Zwischenkreiskondensator (46) ist dazu über einen Widerstand (R₁) und einen dazu in Reihe geschalteten Schalter (S₂) mit der Einspeiseeinheit (28) gekoppelt.

## Beschreibung

Die Erfindung betrifft einen Frequenzumrichter zum Betreiben einer elektrischen Maschine an einem elektrischen Netz. Der Frequenzumrichter weist eine Einspeiseeinheit, zumindest einen Umrichter sowie einen die Einspeiseeinheit mit dem Umrichter verbindenden Gleichspannungs-Zwischenkreis auf. In dem Gleichspannungs-Zwischenkreis, oder kurz Zwischenkreis, ist zumindest ein Zwischenkreiskondensator bereitgestellt. Die Erfindung betrifft auch ein Verfahren zum Betreiben des Frequenzumrichters. Ein Frequenzumrichter der genannten Art ist aus der DE 197 39 553 A1 bekannt.

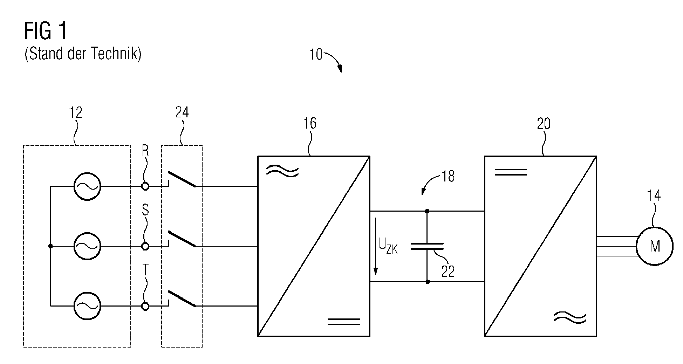

Die prinzipielle Funktionsweise eines Frequenzumrichters der genannten Art ist anhand der schematischen Darstellung in FIG 1 im Folgenden näher erläutert. Mittels eines Frequenzumrichters 10 kann elektrische Energie zwischen einem Wechselspannungs-Versorgungsnetz, im Folgenden kurz als Netz 12 bezeichnet, und einer elektrischen Maschine 14 ausgetauscht werden. Die elektrische Maschine 14 kann ein Elektromotor oder ein Generator sein. Entsprechend erfolgt der Austausch der elektrischen Energie entweder vom Netz 12 zur Maschine 14 oder umgekehrt.

Mittels des Frequenzumrichters 10 ist es möglich, eine Umwandlung zwischen einer Netz-Wechselspannung mit vorgegebener Netzfrequenz einerseits und einer für den Betrieb der elektrischen Maschine 14 nötigen Wechselspannung mit wählbarer Frequenz andererseits durchzuführen. Eine netzseitige Einspeiseeinheit 16 des Frequenzumrichters 10 wandelt dazu zwischen der Netz-Wechselspannung und einer Gleichspannung U_{ZK} um, die zwischen zwei Leitungszweigen eines Zwischenkreises 18 anliegt. Der Zwischenkreis 18 verbindet die Einspeiseeinheit 16 mit einem Umrichter 20. Der Umrichter 20 wandelt zwischen der Gleichspannung U_{zK} und einer Wechselspannung für die elektrische Maschine 14 um.

Das Netz 12 kann, wie hier dargestellt, ein Drehstromnetz mit drei Netzphasen R, S, T sein. Es kann sich bei dem Netz 12 aber z.B. auch um ein zweiphasiges Netz handeln. Auch die elektrische Maschine 14 kann eine Maschine mit einer beliebigen Anzahl von Phasen sein. Hier dargestellt ist eine dreiphasige Drehstrommaschine.

In dem Zwischenkreis 18 sorgt ein Zwischenkreiskondensator 22 durch eine ausreichend große Kapazität dafür, dass eine bei einem der beschriebenen Wandlungsschritte erzeugte Welligkeit der Gleichspannung U_{ZK} so weit geglättet ist, dass sie den anderen Wandlungsschritt nicht beeinflusst. Bevorzugt ist die Zwischenkreiskondensator-Kapazität auch groß genug, um bei einem kurzzeitigen Ausfall der Netz-Wechselspannung für einige Millisekunden einen unterbrechungsfreien Betrieb der elektrischen Maschine 14 zu ermöglichen.

Um die elektrische Maschine 14 als Motor zu betreiben, wird durch Schließen eines Hauptschützes 24 die Einspeiseeinheit 16 mit den Netzphasen R, S, T des Netzes 12 elektrisch verbunden. Die Einspeiseeinheit 16 erzeugt daraufhin, beispielsweise durch eine Vollwellen-Gleichrichtung, die Gleichspannung U_{zK}, wodurch der Zwischenkreiskondensator 22 aufgeladen wird. Dieser Ladevorgang wird im Folgenden als Vorladephase bezeichnet.

Nachdem der Zwischenkreiskondensator 22 so weit aufgeladen ist, dass die Gleichspannung U_{zK} einen gewünschten Spannungswert erreicht hat, kann die elektrische Maschine 14 betrieben werden. Dazu erzeugt der Umrichter 20 aus der Gleichspannung U_{zK} eine hier dreiphasige Wechselspannung, so dass in der elektrischen Maschine 14 ein Drehstrom fließt. Dieser Vorgang ist im Folgenden als Betriebsphase bezeichnet. Eine Frequenz des Drehstroms kann bei dem Umrichter 20 einstellbar sein.

Vor dem Schließen des Hauptschützes ist der Zwischenkreiskondensator in der Regel ungeladen. In der Vorladephase ergibt sich hierdurch das Problem, dass nach dem Schließen des Hauptschützes die Stromstärke des vom Netz in den ungeladenen Zwischenkreiskondensator fließenden Ladestroms aufgrund der großen Kapazität des Zwischenkreiskondensators so groß werden kann, dass Komponenten der Einspeiseeinheit beschädigt werden.

Die oben genannte Druckschrift lehrt hierzu, zwischen einem Gleichspannungsausgang der Einspeiseeinheit und dem betreffenden Anschluss des Zwischenkreiskondensators ein Strombegrenzungselement vorzusehen, welches den Ladestrom des Zwischenkreiskondensators auf einen von der Ladespannung weitgehend unabhängigen Wert begrenzt. Nachteilig bei dieser Lösung ist, dass es sich bei dem Strombegrenzungselement um einen speziell anzufertigenden Halbleiter handeln kann, um für einen bestimmten Anwendungsfall die passende Kennlinie zu erhalten.

Es ist Aufgabe der vorliegenden Erfindung, für einen Frequenzumrichter der beschriebenen Art einen ausreichenden Schutz für dessen Einspeiseeinheit bereitzustellen.

Die Aufgabe wird durch einen Frequenzumrichter gemäß Patentanspruch 1 und ein Verfahren gemäß Patentanspruch 8 gelöst. Vorteilhafte Weiterbildungen des erfindungsgemäßen Frequenzumrichters und des erfindungsgemäßen Verfahrens sind durch die Unteransprüche gegeben.

Der gattungsgemäße Frequenzumrichter wird gemäß der Erfindung weitergebildet, indem der zumindest eine Zwischenkreiskondensator des Zwischenkreises über einen Widerstand und einen dazu in Reihe geschalteten Schalter mit der Einspeiseeinheit gekoppelt ist. Hierdurch ergibt sich der Vorteil, dass der Zwischenkreiskondensator vollständig von der Einspeiseeinheit und damit vom Netz elektrisch getrennt werden kann. Dies ist sogar im Falle eines Kurzschlusses möglich: Durch den Widerstand ist verhindert, dass eine Stromstärke des Kurzschlussstromes so groß wird, dass eine Unterbrechung des Kurzschlussstromes mittels des Schalters (z.B. wegen eines beim Öffnen des Schalters entstehenden Lichtbogens) unmöglich würde. Als weiterer Vorteil begrenzt der Widerstand auch den Ladestrom des Zwischenkreiskondensators in der Vorladephase.

Somit erfüllt die Reihenschaltung bestehen aus dem Schalter und dem Widerstand in dem Zwischenkreis eine Doppelfunktion: Sie ermöglicht das Abkoppeln des Zwischenkreiskondensators bei einem Kurzschluss, und sie ermöglicht es, den Zwischenkreiskondensator mit einer moderaten Ladestromstärke aufzuladen. Für diese beiden Fälle ist damit ein wirksamer Schutz für die Einspeiseeinheit vor einer thermischen Zerstörung durch einen Strom mit einer kritischen Stromstärke bereitgestellt.

Gemäß dem erfindungsgemäßen Verfahren wird der erfindungsgemäße Frequenzumrichter wie folgt betrieben. Zunächst wird die Einspeiseeinheit mit dem Netz gekoppelt. Anschließend wird der Schalter der Reihenschaltung geschlossen, wodurch ein Ladestrom zum Zwischenkreiskondensator ermöglicht wird. Dieser Ladestrom fließt durch den Widerstand, so dass er in seiner Stromstärke beschränkt ist. Durch das Schließen dieses ersten Schalters im Zwischenkreis ist die Vorladephase eingeleitet, so dass hierauf der Zwischenkreiskondensators mit elektrischer Energie aus dem Netz mittels des Ladestromes aufgeladen wird.

In einer bevorzugten Ausführungsform des erfindungsgemäßen Frequenzumrichters ist der Reihenschaltung aus dem Widerstand und dem ersten Schalter ein zweiter Schalter parallel geschaltet ist, durch welchen die Reihenschaltung überbrückbar ist. Hierdurch kann in einer Betriebsphase des erfindungsgemäßen Frequenzumrichters die im Zwischenkreis umgesetzte Verlustleistung verringert werden.

Das erfindungsgemäße Verfahren sieht hier vor, dass der zweite Schalter in der Vorladephase, also während des Aufladens des Zwischenkreiskondensators, geöffnet bleibt. So bleibt der Ladestrom durch den Widerstand begrenzt. Mit dem Beginn der Betriebsphase wird der zweite Schalter dann geschlossen.

Bevorzugt ist dann der erste Schalter während der Betriebsphase geöffnet. Zum Beenden der Betriebsphase wird dann zunächst der erste Schalter wieder geschlossen und anschließend zuerst der zweite Schalter und dann wieder der erste Schalter geöffnet. Diese Schaltreihenfolge verhindert die Bildung eines Lichtbogens am zweiten Schalter.

Bei einer vorteilhaften Weiterbildung des erfindungsgemäßen Frequenzumrichters weist der Zwischenkreis einen Kommutierungskondensator auf, durch welchen eine Kommutierungskapazität für die Einspeiseeinheit bereitgestellt ist. Der Kommutierungskondensator ist dabei unabhängig vom Schaltzustand der beiden Schalter durchgehend mit der Einspeiseeinheit verbunden. Mit anderen Worten ist die Reihenschaltung (bestehend aus dem erstem Schalter und dem Widerstand) zwischen den Kommutierungskondensator und den Zwischenkreiskondensator geschaltet.

Mit einer Kommutierungskapazität ist hier eine Kapazität gemeint, deren Wert wesentlich kleiner als der Kapazitätswert des Zwischenkreiskondensators ist. Bevorzugt beträgt die Kommutierungskapazität weniger zehn Prozent, insbesondere weniger als ein Prozent, der Zwischenkreiskapazität. Ein Betrag der Kommutierungskapazität kann auch in Abhängigkeit von einer Induktivität des Netzes, an das der Frequenzumrichter angeschlossen ist, oder von einer Kommutierungsinduktivität von Drosseln, die der Einspeiseeinheit vorgeschaltet sein können, gewählt sein.

Mittels der Kommutierungskapazität kann erreicht werden, dass eine beim Betrieb des Einspeisewandlers als Hochsetzsteller entstehende Induktionsspannung stets unterhalb eines für die Funktionstüchtigkeit des Frequenzumrichters kritischen Spannungswert bleibt. Da die Kommutierungskapazität verhältnismäßig klein ist, ist sichergestellt, dass der Einspeisewandler beim Schließen des Hauptschützes nicht durch einen Ladestrom des Kommutierungskondensators beschädigt wird.

Der erste Schalter kann einen Halbleiterschalter umfassen. Solche Schalter können im Vergleich zu elektromechanischen Schaltern sehr viel schneller geschaltet werden, so dass beispielsweise bei einem Durchbruch im Zwischenkreis ein dann fließender Kurzschlussstrom schnell genug unterbrochen werden kann, bevor weitere Bauteile beschädigt werden.

Der Halbleiterschalter kann insbesondere einen Transistor oder einen Thyristor oder einen Triac umfassen. Bevorzugte Typen von Transistoren sind ein Si-Transistor (Si - Silizium), ein MOSFET (MOS - Metall-Oxid-Halbleiter, FET - Feldeffekttransistor), ein SiC-MOSFET (SiC - Siliziumcarbid) ein SiC-JFET (JFET - Sperrschicht-FET, Junction-FET) oder ein IGBT (Insulated Gate Bipolar Transistor). SiC-basierte Transistoren sind sehr Hitzebeständig, so dass mittels des Frequenzumrichters auch elektrische Maschinen mit einer großen elektrischen Leistung, beispielsweise über 10 kW, betrieben werden können. Als Thyristor wird bevorzugt verwendet: ein GTO-Thyristor (GTO - Gate turn-off), MCT (MOS controll thyristor), MTO-Thyristor (MTO - MOS turn-off) oder IGCT (Integrated Gate Commutated Thyristor).

Der zweite Schalter, mit dem der Widerstand und der erste Schalter überbrückt werden können, umfasst bevorzugt ebenfalls einen Halbleiterschalter, insbesondere einen Transistor (z.B. IGBT, MOSFET oder SiC-MOSFET), einen Thyristor (z.B. GTO, MCT, MTO oder IGCT) oder einen Triac.

Bevorzugt sind die Halbleiterschalter selbstsperrend, d.h. bei einer Steuerspannung von 0 V befindet sich der jeweilige Halbleiterschalter dann in einem sperrenden Zustand. Dadurch ist in vorteilhafter Weise verhindert, dass bei einem Ausfall der Steuereinrichtung für den Halbleiterschalter ein unkontrollierter Strom in dem Zwischenkreis fließt.

Der Halbleiterschalter muss nicht aus einem einzigen Bauteil bestehen. Er kann auch eine Kaskodenschaltung aus einem MOSFET und einem JFET umfassen.

Bei dem erfindungsgemäßen Frequenzumrichter ist ganz besonders vorteilhaft, wenn die Reihenschaltung aus dem Widerstand und dem ersten Schalter zusätzlich zum wahlweisen Unterbrechen eines von dem Einspeisewandler zu dem Umrichter fließenden Stromes ausgelegt ist. Dann kann durch den ersten Schalter der gesamte umrichterseitige Teil des Frequenzumrichters vom Netz abgeschaltet werden.

Wenn die Reihenschaltung aus dem Widerstand und dem ersten Schalter mit einer Diode überbrückt ist, kann ein Stromfluss von dem Umrichter zur Einspeiseeinheit ermöglicht sein. Dies erlaubt einen Generatorsbetrieb der elektrischen Maschine, bei dem eine nur sehr geringe Verlustleistung im Zwischenkreis umgesetzt wird.

Die Reihenschaltung bestehend aus dem ersten Schalter und dem Widerstand kann in vorteilhafter Weise auch dazu genutzt werden, die Einspeiseeinheit während der Betriebsphase nach einem kurzzeitigen Netzausfall zu schützen, wenn beispielsweise eine Halbwelle in einer der Phasen ausgeblieben ist. Ein solcher Netzausfall führt zu einer Unterbrechung eines von der Einspeiseeinheit aus dem Netz empfangenen elektrischen Leistungsflusses, so dass der Zwischenkreiskondensator nahezu vollständig entladen sein kann, wenn der Leistungsfluss wieder einsetzt. Gemäß einer Weiterbildung des erfindungsgemäßen Verfahrens wird hier der Zwischenkondensator in einer Nachladephase durch Öffnen des zweiten Schalters und durch Schließen des ersten Schalters in der Weise aufgeladen, dass der Nachladestrom durch den Widerstand geführt wird. So kann ein kritischer Stromstärkewert des Nachladestromes vermieden werden.

Gemäß einer anderen Weiterbildung des erfindungsgemäßen Verfahrens wird ein Ladezustand des Zwischenkreiskondensators beobachtet. Falls nach einer vorbestimmten Zeitdauer nach Beginn der Vorladephase der Ladezustand ein vorbestimmtes Kriterium erfüllt, wenn also beispielsweise der Zwischenkondensator noch nicht zumindest zur Hälfte aufgeladen ist, wird die Vorladephase abgebrochen und der erste Schalter in einen sperrenden Zustand geschaltet. So ist vorteilhaft vermieden, dass der erste Schalter oder der Widerstand oder die Einspeiseeinheit beschädigt wird, wenn (umrichterseitig) im Zwischenkreis, im Umrichter selbst oder in der elektrischen Maschine bereits während der Vorladephase ein Kurzschluss vorhanden ist.

Im Folgenden wird die Erfindung anhand eines bevorzugten Ausführungsbeispiels näher erläutert. Dazu zeigt:
- FIG 1: ein Blockschaltbild eines Frequenzumrichters gemäß dem Stand der Technik, mit dem eine elektrische Maschine an einem Netz betrieben wird, und
- FIG 2: ein Blockschaltbild eines Frequenzumrichters gemäß einer Ausführungsform des erfindungsgemäßen Frequenzumrichters.

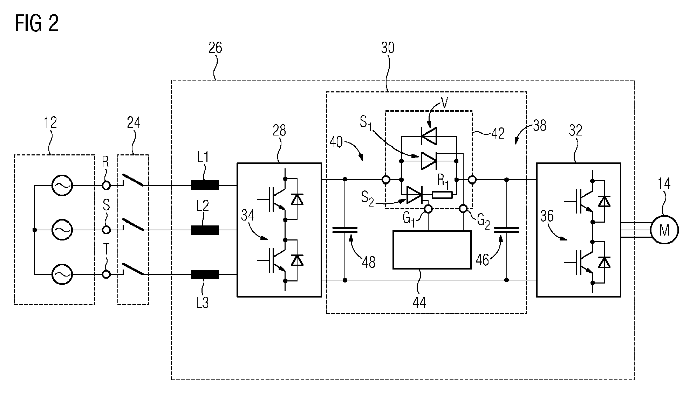

In FIG 2 ist ein Frequenzumrichter 26 gezeigt, der über ein Hauptschütz 24 an Netzphasen R, S, T eines Netzes 12 angeschlossen ist. An den Frequenzumrichter 26 ist eine elektrische Maschine 14 angeschlossen. Das Netz 12, das Hauptschütz 24 und die elektrische Maschine 14, die in FIG 2 gezeigt sind, entsprechen den in FIG 1 gezeigten Elementen mit den gleichen Bezugszeichen. Diese Elemente sind hier deshalb nicht noch einmal erläutert.

Bei dem Frequenzumrichter 26 ist eine Einspeiseeinheit 28 über einen Zwischenkreis 30 mit einem Umrichter 32 verschaltet.

Die Einspeiseeinheit 28 kann in bekannter Weise ausgestaltet sein. Sie weist in dem gezeigten Beispiel zum Gleichrichten der zwischen den Netzphasen R, S, T anliegenden Wechselspannungen drei Halbbrücken auf, von denen in FIG 2 der Übersichtlichkeit halber nur eine Halbbrücke 34 ohne weitere Verschaltungselemente dargestellt ist. Die Einspeiseeinheit 28 kann auch als Wechselrichter zum Einspeisen von elektrischer Energie in das Netz 12 betrieben werden.

Der Umrichter 32 kann ebenfalls in bekannter Weise ausgestaltet sein. In dem vorliegenden Beispiel umfasst er drei Halbbrücken, von denen in FIG 2 lediglich eine Halbbrücke 36 (ohne Verschaltungselemente) dargestellt ist. Der Umrichter 32 ist hier als Wechsel- und als Gleichrichter betreibbar.

Der Einspeiseeinheit 28 sind netzseitig Drosseln L1, L2, L3 vorgeschaltet, die als Kommutierungsinduktivitäten ausgebildet sind.

Ein umrichterseitiger Teil 38 des Zwischenkreises 30 und ein einspeiseseitiger Teil 40 sind über eine Schalteinrichtung 42 miteinander verschaltet.

Ein Steueranschluss G₁ eines Schalters S₁ und ein Steueranschluss G₂ eines Schalters S₂ der Schalteinrichtung 42 sind mit einer Steuereinrichtung 44 gekoppelt. Bei dem gezeigten Beispiel handelt es sich bei den Schaltern S₁ und S₂ um Thyristoren.

Der Schalter S₂ bildet zusammen mit einem Vorladewiderstand R₁ eine Reihenschaltung. Über den Schalter S₁ und über die Reihenschaltung sind der einspeiseseitige Teil 40 und der umrichterseitige Teil 38 des Zwischenkreises 30 miteinander gekoppelt. Eine Diode V der Schalteinrichtung 42 ermöglicht in einem Generatorbetrieb der elektrischen Maschine 14 einen Stromfluss vom Umrichter 32 zur Einspeiseeinheit 28.

Im umrichterseitigen Teil 38 befindet sich ein Zwischenkreiskondensator 46. Eine Kapazität des Zwischenkreiskondensators 46 kann in dem gezeigten Beispiel größer als 1 mF sein.

In dem einspeiseseitigen Teil 40 sind Stromschienen des Zwischenkreises über einen Kommutierungskondensator 48 kapazitiv miteinander gekoppelt. Der Kommutierungskondensator 48 kann ein Keramik- oder Folienkondensator sein. Die Kapazität des Kommutierungskondensators 48 ist in diesem Beispiel kleiner als 5 µF. Sie ist aber im Allgemeinen in Abhängigkeit von einer über den Frequenzumrichter 26 leitbaren Gesamtleistung gewählt, wobei sie zudem bevorzugt weniger als zehn Prozent der Kapazität des Zwischenkreiskondensators 46 beträgt.

Zum Einschalten des Frequenzumrichters 26 wird die Einspeiseinheit 28 durch Schließen des Hauptschützes 24 mit dem Netz 12 verbunden. Die Schalter S₁ und S₂ sind dabei geöffnet. Dazu erzeugt die Steuereinheit 44 an den Anschlüssen G₁ und G₂ entsprechende Steuerspannungen zum Sperren der Schalter S₁ und S₂.

Zum Vorladen des Zwischenkreiskondensators 46 wird der Schalter S₂ geschlossen, so dass ein Ladestrom des Zwischenkreiskondensators 46 ausschließlich über den Vorladewiderstand R₁ geführt ist.

Nachdem die Vorladung abgeschlossen ist, wird der Schalter S₁ in einen leitenden Zustand geschaltet. Hierdurch werden der Schalter S₂ und der Vorladewiderstand R₁ überbrückt. Da die Reihenschaltung dieser beiden Bauteile einen höheren Widerstand hat als der geschlossene Schalter S₁, fließt durch den Vorladewiderstand R₁ nahezu kein Strom mehr. Der Schalter S₂ kann schließlich in einen sperrenden Zustand geschaltet werden. Mit dem Abschluss der Vorladung beginnt die Betriebsphase.

Bei dem Schalter S₁ kann es sich um einen IGBT, einen Thyristor (z.B. vom Typ GTO, MCT, MTO oder IGCT), einen MOSFET, einen SiC-MOSFET, einen Triac oder einen sonstigen elektronischen Leistungsschalter oder auch um einen elektromechanischen Schalter handeln.

Der Schalter S₂ kann ein MOSFET, ein SiC-MOSFET, ein Thyristor (z.B. vom Typ GTO, MCT, MTO oder IGCT), ein IGBT, ein Triac oder ein sonstiger elektronischer Leistungshalbleiter sein.

In einem Generatorbetrieb kann ein von der elektrischen Maschine 14 erzeugter Strom über die Diode V geführt sein. Für den Fall, dass als Schalter S₁ ein Bauteil verwendet wird, dass rückwärts leitfähig ist, über das also auch ein Strom vom Umrichter 32 zur Einspeiseeinheit 26 geführt werden kann, kann der Zwischenkreis 30 auch ohne die Diode V bereitgestellt sein.

Die in dem Beispiel von FIG 2 gezeigte Schalteinrichtung 42 weist eine Vielzahl von Vorteilen auf. Es wird kein elektromechanischer Schalter verwendet, so dass die Schalteinrichtung 42 verschleißfrei ist und keine Kontakte bei Schaltvorgängen abbrennen können. Die Schalteinrichtung 42 ist in beide Richtungen stromtragfähig (also für den Motor- und den Generatorbetrieb geeignet), ohne dass dazu zwei Schalter in Reiheschaltung notwendig sind. Dies macht die Schalteinrichtung 42 besonders verlustarm. Im Fehlerfall, insbesondere auch bei einem Kurzschluss, kann der umrichterseitige Teil 38 des Zwischenkreises 30 schnell genug abgeschaltet werden, um eine Beschädigung der Einspeiseeinheit 28 zu verhindern.

Durch die Schalteinrichtung 42 ist somit sowohl eine Steuerung der Stromstärke des Ladestromes des Zwischenkreiskondensators 46 als auch eine Netzabtrennung des Umrichters 32 in einem Bauelement, eben der Schalteinrichtung 42, realisiert, das beispielsweise in ein Leistungsmodulgehäuse integriert sein kann. Die Schaltungseinrichtung 42 kann sehr robust ausgestaltet werden, indem als Schalter S₁ und S₂ elektronische Leistungsschalter verwendet werden, die besonders beständig gegen eine thermische Belastung sind. Die thermische Belastung kann beispielsweise als I²t-Wert der Bauteile angegeben werden. So weisen etwa Thyristoren eine verhältnismäßig große thermische Beständigkeit auf und damit auch einen hohen I²t-Wert.

Insgesamt ist durch das Beispiel gezeigt, wie die Kombination aus den Schaltern S₁ und S₂, der Diode V und dem Vorladewiderstand R₁ sowohl in der Vorladephase als auch in der Betriebphase einen wirksamen Schutz für den Frequenzumrichter 26 bietet. Der Zwischenkreiskondensator 46 kann mit einem Aufladestrom aufgeladen werden, dessen Stromstärke unter einem kritischen Schwellwert liegt. Im Fehlerfall (DC-Kurzschluss) kann der Zwischenkreis 30 schnell vom Netz 12 getrennt werden. Zudem kann die elektrische Maschine 14 kann im 4-Quadranten-Betrieb betrieben werden.

## Patentansprüche

1. Frequenzumrichter (26) zum Betreiben einer elektrischen Maschine (14) an einem elektrischen Netz (12), wobei der Frequenzumrichter (26) eine Einspeiseeinheit (28) und einen Umrichter (32) aufweist, die miteinander über einen Gleichspannungs-Zwischenkreis (30) verschaltet sind, in welchem durch zumindest einen Zwischenkreiskondensator (46) eine Zwischenkreiskapazität bereitgestellt ist, **dadurch** - **kennzeichnet**, dass der zumindest eine Zwischenkreiskondensator (46) mit der Einspeiseeinheit (28) über einen ersten Schalter (S₂) und einen dazu in Reihe geschalteten Widerstand (R₁) gekoppelt ist.

2. Frequenzumrichter (26) nach Anspruch 1, bei welchem der Reihenschaltung aus dem Widerstand (R₁) und dem ersten Schalter (S₂) ein zweiter Schalter (S₁) parallel geschaltet ist, durch welchen die Reihenschaltung überbrückbar ist.

3. Frequenzumrichter (26) nach Anspruch 1 oder 2, bei dem der Zwischenkreis (30) einen Kommutierungskondensator (48) aufweist, durch welchen eine Kommutierungskapazität für die Einspeiseeinheit (28) bereitgestellt ist, wobei die Reihenschaltung (R₁,S₂) zwischen den Kommutierungskondensator (48) und den Zwischenkreiskondensator (46) geschaltet ist.

4. Frequenzumrichter (26) nach einem der vorhergehenden Ansprüche, bei dem der erste Schalter (S₂) einen Halbleiterschalter umfasst, insbesondere einen Transistor, bevorzugt einen MOSFET, SiC-MOSFET oder IGBT, einen Thyristor (S₂), bevorzugt einen GTO, MCT, MTO oder IGCT, oder einen Triac.

5. Frequenzumrichter (26) nach einem der vorhergehenden Ansprüche, bei dem der zweite Schalter (S₁) einen Halbleiterschalter umfasst, insbesondere einen Transistor, bevorzugt einen IGBT, MOSFET oder SiC-MOSFET, einen Thyristor (S₁), bevorzugt einen GTO, MCT, MTO oder IGCT, oder einen Triac.

6. Frequenzumrichter (26) nach einem der vorhergehenden Ansprüche, bei dem die Reihenschaltung aus dem Widerstand (R₁) und dem ersten Schalter (S₂) mit einer Diode (V) überbrückt ist, durch welche ein Stromfluss von dem Umrichter (32) zur Einspeiseeinheit (28) ermöglicht ist.

7. Frequenzumrichter (26) nach einem der vorhergehenden Ansprüche, bei dem die Reihenschaltung aus dem Widerstand (R₁) und dem ersten Schalter (S₂) zusätzlich zum wahlweisen Unterbrechen eines von dem Einspeisewandler (28) zu dem Umrichter (32) fließenden Stromes ausgelegt ist.

8. Verfahren zum Betreiben eines Frequenzumrichters (26) gemäß einem der vorhergehenden Ansprüche, umfassend die Schritte:
- Koppeln der Einspeiseeinheit (28) mit dem Netz (12);
- Schließen des ersten Schalters (S₂) und hierdurch Ermöglichen eines Ladestromes zum Zwischenkreiskondensator (46) durch den Widerstand (R₁) und hierdurch in einer Vorladephase Aufladen des Zwischenkreiskondensators (46) mit elektrischer Energie aus dem Netz (12) mittels des Ladestromes.

9. Verfahren nach Anspruch 8 zum Betreiben eines Frequenzumrichters (26) gemäß einem der Ansprüche 2 bis 7, wobei zum Aufladen des Zwischenkreiskondensators (46) in der Vorladephase der zweite Schalter (S₁) geöffnet bleibt und mit Beginn der Betriebsphase der zweite Schalter (S₁) geschlossen wird, wobei der erste Schalter (S₂) bevorzugt geöffnet wird.

10. Verfahren nach Anspruch 9, wobei in der Betriebsphase nach einer Unterbrechung eines von der Einspeiseeinheit (28) aus dem Netz (12) empfangenen elektrischen Leistungsflusses der Zwischenkondensator (46) in einer Nachladephase nachgeladen wird und hierbei der zweite Schalter (S₁) geöffnet wird, so dass ein Nachladestrom des Zwischenkreiskondensators (46) durch den Widerstand (R₁) geführt wird.

11. Verfahren nach Anspruch 9 oder 10, zum Beenden der Betriebsphase der zweite Schalter (S₁) vor dem ersten Schalter (S₂) geöffnet wird.

12. Verfahren nach einem der Ansprüche 8 bis 11, wobei ein Ladezustand des Zwischenkreiskondensators (46) beobachtet wird und die Vorladephase abgebrochen und der erste Schalter (S₂) in einen sperrenden Zustand geschaltet wird, falls nach einer vorbestimmten Zeitdauer seit Beginn der Vorladephase der Ladezustand ein vorbestimmtes Kriterium erfüllt.
